# EUROPEAN PATENT SPECIFICATION

(11) **EP 3 225 858 B1**
(45) Date of publication and mention of the grant of the patent: **12.12.2018**
(21) Application number: 16162832.6
(22) Date of filing: 30.03.2016
(51) Int. Cl.: F16B 25/00, F16B 25/10

(54) **SCREW**
SCHRAUBE
VIS

(43) Date of publication of application: 04.10.2017
(73) Proprietor: Hsu, Kuo-Tai, Tainan City 710 (TW)
(72) Inventor: Hsu, Kuo-Tai, Tainan City 710 (TW)
(74) Representative: Jannig, Peter

(56) References cited:
- TW-U- M 339 599
- US-A- 4 697 969
- US-A1- 2007 286 701

## Description

### BACKGROUND OF THE INVENTION

### 1. Field of the Invention

The present invention relates to a screw and, more particularly, to a screw with a spiral continual groove in which residues can be held.

### 2. Description of the Related Art

Large amount of wood or compound wooden materials mixed and compressed from plastic resin and wood chips are used to produce wooden articles for furniture, decoration and construction, and screws are often used in connection with wooden articles together. A conventional screw generally includes a shank and at least one thread formed on the shank, so that the screw can be screwed into the articles which need to be fastened or interlocked. Furthermore, in order to enhance the speed of screwing the screw into the articles to be fastened, a design with slots disposing in the shank or crests of the thread for collecting or receiving chippings or residues is already proposed. More specifically, chippings, wooden chippings for example, are produced when the screw is screwed into the articles to be assembled, and the slots can be used for receiving the chippings so that the chippings will not obstruct the process of screwing the screw into the articles, allowing rapid insertion of the screw into the articles and preventing disintegration of the materials of the articles. However, chippings or residues held in the slots in the shank or the crest are limited but accumulated in an upper section of a screw mostly, decelerate a process of the screw driven in the article, and even inflate or break the article.

Taiwan Utility Model No. M373974 discloses a screw with chip removal flutes. The screw includes two symmetric spiral chip removal flutes formed on a periphery of a self-drilling portion for removing residues from the screw driven in a wood article. However, each chip removal flute which is wide and has more circles on a screw shank (even on the whole shank) allows threads and the article to occlude ineffectively but reduce binding capacity of the screw. Furthermore, the chip removal flutes decrease strength of the screw and make the screw driven in the article break easily. The document US 4 697 969 A shows another screw of the prior art.

### BRIEF SUMMARY OF THE INVENTION

Thus, an objective of the present invention is to provide a screw to improve the aforementioned problems. The screw includes a continual helical groove in which residues are held, so that the screw is effective in removing residues and speedily driven in articles to be fastened. Furthermore, the continual helical groove does not reduce binding capacity between the screw and articles to be fastened.

To achieve this and other objectives, a screw of the present invention includes a shank and a thread. The shank includes an outer circumference, an insertion tip, and a head end spaced from the insertion tip along a longitudinal axis of the shank. The thread is helically formed on the outer circumference of the shank and includes a plurality of thread convolutions. A plurality of ribs is provided between two adjacent thread convolutions of the thread and spaced from one another on the outer circumference of the shank. A helical groove is formed in the outer circumference of the shank and extends continuously through at least partial thread convolutions of the thread. The helical groove intersects partial ribs and has a width which is 1.5-2.5 times a width of each rib.

In a preferred form, the helical groove extends to an uppermost thread convolution of the thread from a nethermost thread convolution of the thread continuously. An inclined angle formed by the helical groove extending toward the head end relative to a horizontal axis perpendicular to the longitudinal axis is between 60 and 80 degrees.

An inclined angle formed by each of the ribs extending toward the head end relative to the horizontal axis is between 50 and 70 degrees and is greater than an inclined angle formed by the thread extending toward the head end relative to the horizontal axis.

An upward extending direction of each of the plurality of ribs is the same as an upward direction of the thread extending toward the head end. Each of the plurality of ribs has a height less than a thread height of each thread convolution. An upward spiral direction of the helical groove is opposite to the upward direction of the thread extending toward the head end, and the helical groove has a depth which is 1.5-2.5 times the height of each rib.

In another preferred form, the screw further includes a cutting groove provided in the shank adjacent to the insertion tip. The helical groove spirally extends from an upper end of the cutting groove to an uppermost thread convolution of the thread continuously.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG. 1 is a perspective view of a screw in accordance with a first embodiment of the present invention.
FIG. 2a is a front view of the screw of FIG. 1.
FIG. 2b is a plan view which illustrates the screw of FIG. 2a rotated 90 degrees.
FIG. 2c is a plan view which illustrates the screw of FIG. 2a rotated 180 degrees.
FIG. 2d is a plan view which illustrates the screw of FIG. 2a rotated 270 degrees.
FIG. 3 is a sectional view taken along line 3-3 of FIG. 2d.
FIG. 4 is a schematic view which illustrates the screw of FIG. 1 driven in an article.
FIG. 5 is a perspective view of a screw in accordance with a second embodiment of the present invention.
FIG. 6a is a front view of the screw of FIG. 5.
FIG. 6b is a plan view which illustrates the screw of FIG. 6a rotated 90 degrees.
FIG. 6c is a plan view which illustrates the screw of FIG. 6a rotated 180 degrees.
FIG. 6d is a plan view which illustrates the screw of FIG. 6a rotated 270 degrees.
FIG. 7 is a schematic view which illustrates the screw of FIG. 5 driven in an article.

### DETAILED DESCRIPTION OF THE INVENTION

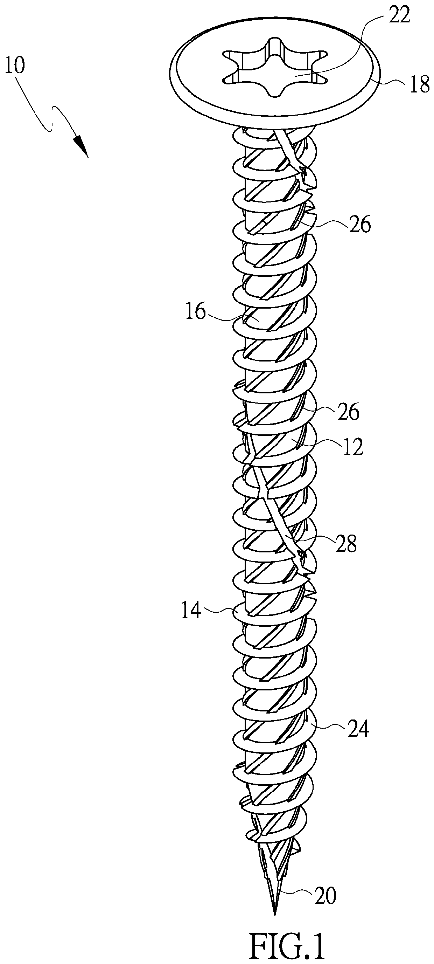

A screw according to a first embodiment of the present invention is shown in FIGS. 1 through 4 of the drawings and generally designated 10. The screw 10 including a shank 12 and a continuous thread 14 formed on the shank 12. The shank 12 includes an outer circumference 16, an insertion tip 20, and a head end 18 spaced from the insertion tip 20 along a longitudinal axis (X1) of the shank 12. In this embodiment, the insertion tip 20 has a pointed end. The head end 18 has an outer diameter larger than a diameter of the shank 12 and includes a socket 22 formed in a top surface thereof for holding a screw driver (not shown in figures).

The thread 14 is helically formed on the outer circumference 16 of the shank 12 and extends from the insertion tip 20 towards the head end 18. In this embodiment, the thread 14 is disposed between the insertion tip 20 and the head end 18 and includes a plurality of thread convolutions 24. A roughly equaled pitch is defined between two adjacent thread convolutions 24, and between two adjacent thread convolutions 24 are designed a plurality of oblique ribs 26. The ribs 26 are parallel to and spaced from one another on the outer circumference 16 of the shank 12, and an upward extending direction of each rib 26 is the same as an upward direction of the thread 14 extending toward the head end 18. In this embodiment, an inclined angle (A1) formed by each of the ribs 26 extending toward the head end 18 relative to a horizontal axis (X2) perpendicular to the longitudinal axis (X1) is between 50 and 70 degrees and greater than an inclined angle formed by the thread 14 extending toward the head end 18 relative to the horizontal axis (X2). Each of the ribs 26 with a rectangular cross section has a width (W1) and a height (H) less than a thread height of each of the thread convolutions 24.

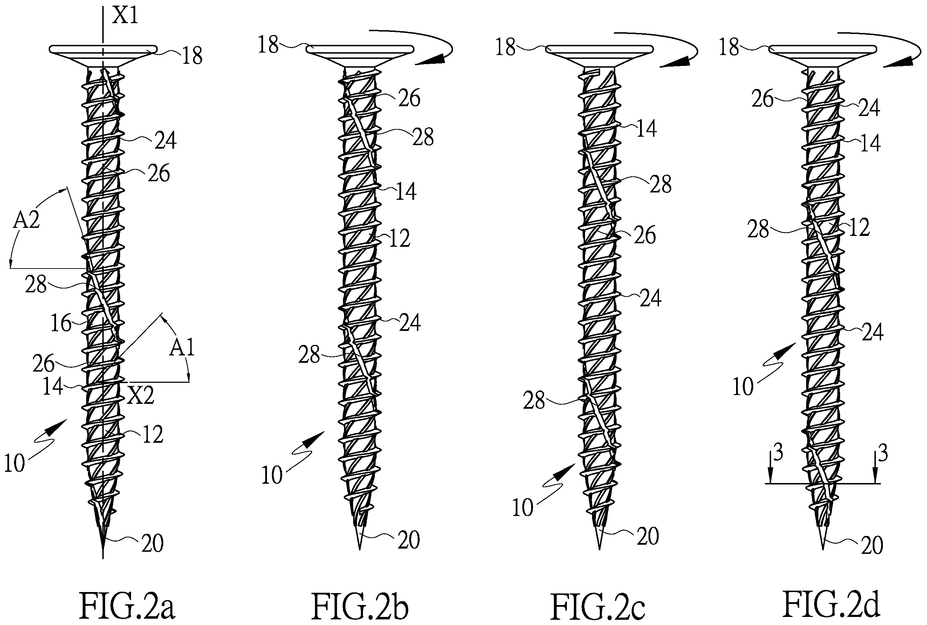

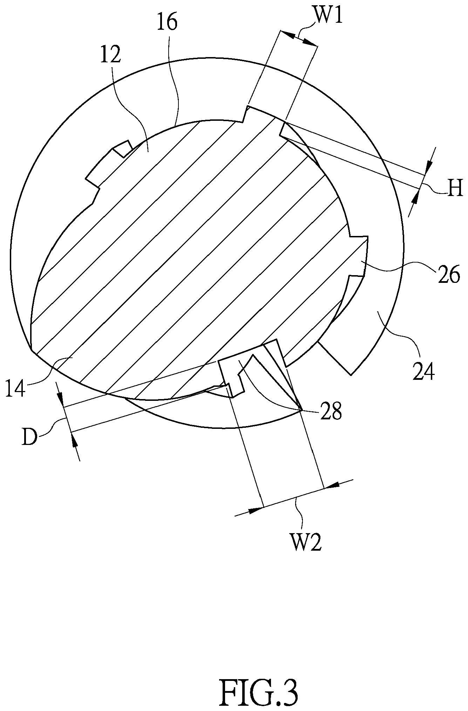

The screw 10 further includes a continuous helical groove 28. The helical groove 28 is formed in the outer circumference 16 of the shank 12 and extends continuously through at least partial thread convolutions 24 of the thread 14. In this embodiment, the helical groove 28 extends to an uppermost thread convolution 24 of the thread 14 from a nethermost thread convolution 24 of the thread 14 continuously, as shown in FIG. 2a through FIG. 2d. An upward spiral direction of the helical groove 28 is opposite to the upward extending direction of the thread 14, and an inclined angle (A2) formed by the helical groove 28 extending toward the head end 18 relative to the horizontal axis (X2) is between 60 and 80 degrees. In this embodiment, the helical groove 28 intersects partial ribs 26, and the helical groove 28 with a substantially U-shaped cross section has a depth (D) and a width (W2), each of which is 1.5-2.5 times the height (H) and the width (W1) of the rib 26, respectively (FIG. 3). In a feasible embodiment, the helical groove 28 has a substantially V-shaped cross section.

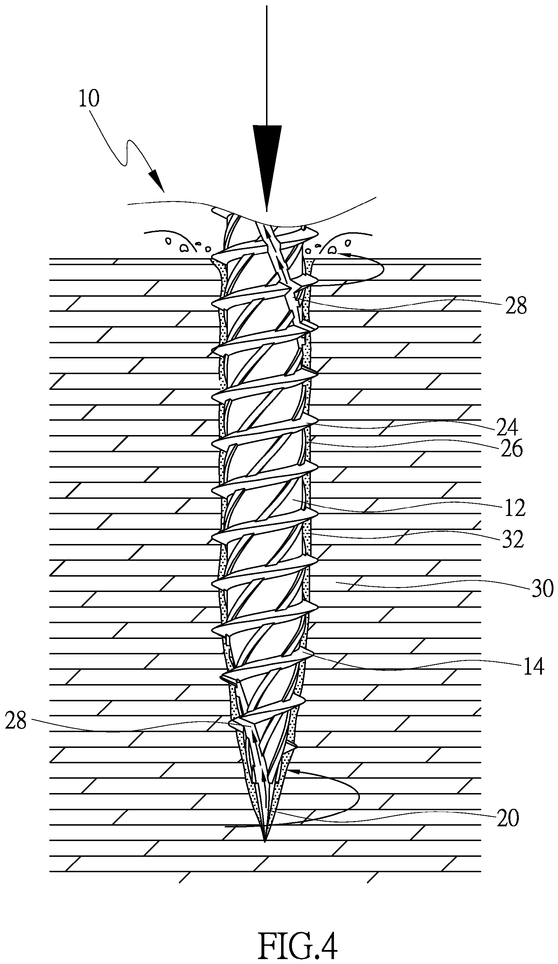

Referring to FIG. 4, when in use, the screw 10 is screwed into an article 30 (such as a wooden article) to be assembled with the insertion tip 20. When the insertion tip 20 of the screw 10 enters the article 30, chippings or residues 32 are generated from the article 30 which is cut by the thread convolutions 24 of the thread 14; meanwhile, the screw 10 on which less friction in a screw-in direction is applied can be driven in the article 30 speedily when the residues 32 are guided and removed upward by the oblique ribs 26. Moreover, the helical groove 28 is used to accommodate the residues 32 squeezed out of the ribs 26, so that the residues 32 will be not accumulated in the upper section of the screw 10. Thus, the screw 10 is coupled with the article 30 effortlessly and speedily for no crack on the article 30 assembled. In addition, the helical groove 28 does not degrade binding capacity between the screw 10 and the article 30. Specifically, the inclined angle (A2) defined by the helical groove 28 relative to the horizontal axis (X2) is between 60 and 80 degrees, so that the helical groove 28 extends two circles merely on the outer circumference 16 of the shank 12. Furthermore, the helical groove 28 has a moderate width (W2) (1.5-2.5 times greater than the width (W1) of each rib 26) for good effect of accommodating the residues 32 but no structural strength of the shank 12 adversely affected. Thus, the helical groove 28 does not interfere with occlusion between the thread convolutions 24 and the article 30 or degraded binding capacity of the screw 10.

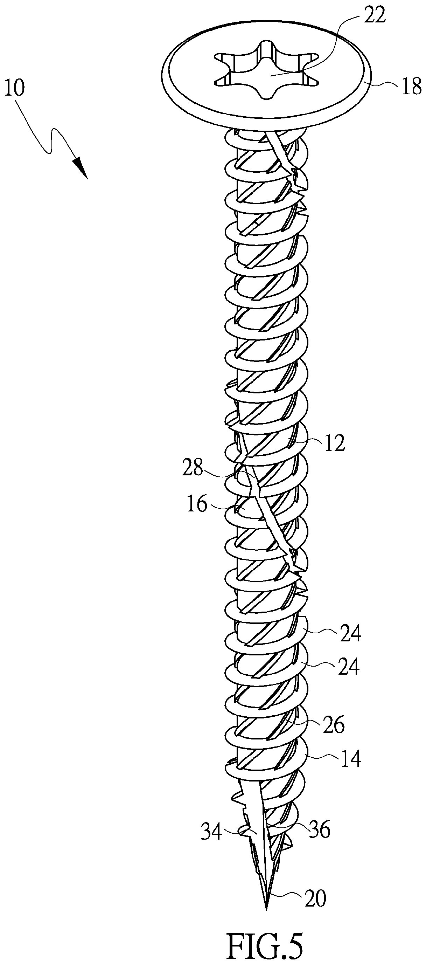

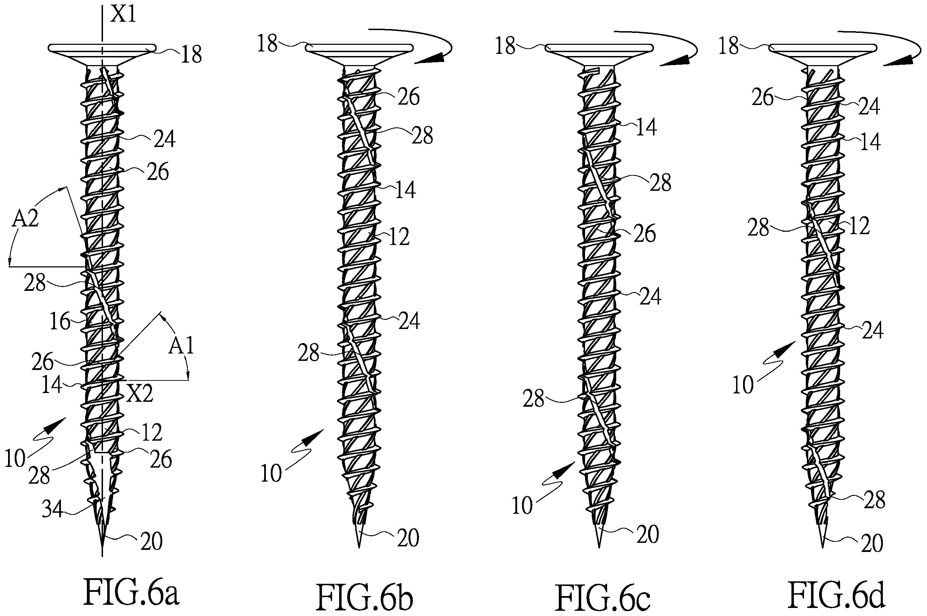

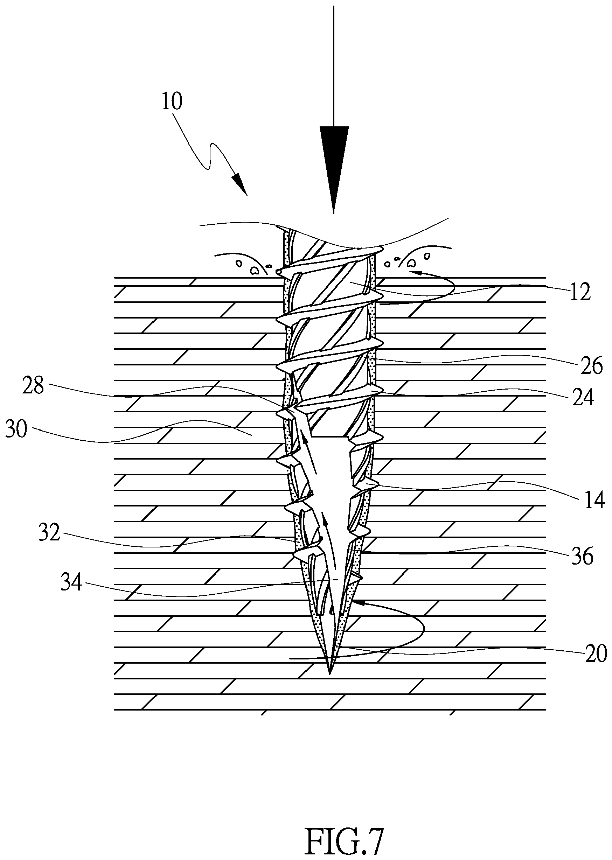

FIGS. 5 through 7 illustrate a screw 10 according to a second embodiment of the present invention. In this embodiment, a cutting groove 34 is provided in the shank 12 adjacent to the insertion tip 20 and extends a certain distance from the insertion tip 20 toward the head end 18 along the longitudinal axis (X1). The helical groove 28 encircling the outer circumference 16 of the shank 12 spirally extends from an upper end of the cutting groove 34 to the uppermost thread convolution 24 of the thread 14 continuously (see FIGS. 6a through 6d). Referring to FIG. 7, the residues 32 are generated from the article 30 which are cut by the thread convolutions 24 of the thread 14 as well as two side edges 36 of the cutting groove 34 when the insertion tip 20 of the screw 10 is screwed in the article 30 to be assembled; meanwhile, the thread 14 is smoothly coupled with the article 30 when the residues 32 are held in the cutting groove 34. Furthermore, the residues 32 held in the cutting groove 34 are squeezed out of the helical groove 28 but not accumulated in the upper section of the screw 10 for less friction applied on the running screw 10, no crack on the article 30, and reduced screwing torque to prevent the screw 10 from breakage because the helical groove 28 is communication with the upper end of the cutting groove 34 and extends to the uppermost thread convolution 24 of the thread 14.

The scope of the invention is to be indicated by the appended claims, rather than by the foregoing description, and all changes which come within the meaning of the claims are intended to be embraced therein.

## Claims

1. A screw (10) comprising:
a shank (12) including an outer circumference (16), an insertion tip (20), and a head end (18) spaced from the insertion tip (20) along a longitudinal axis (X1) of the shank (12);
a thread (14) helically formed on the outer circumference (16) of the shank (12) and including a plurality of thread convolutions (24): **characterized by**
a plurality of ribs (26) provided between two adjacent thread convolutions (24) of the thread (14) and spaced from one another on the outer circumference (16) of the shank (12); and
a helical groove (28) formed in the outer circumference (16) of the shank (12) and extending continuously through at least partial thread convolutions (24) of the thread (14), with the helical groove (28) intersecting partial ribs (26) and having a width (W2) which is 1.5-2.5 times a width (W1) of each rib (26).

2. The screw according to in claim 1, wherein the helical groove (28) extends to an uppermost thread convolution (24) of the thread (14) from a nethermost thread convolution (24) of the thread (14) continuously, wherein an inclined angle (A2) formed by the helical groove (28) extending toward the head end (18) relative to a horizontal axis (X2) perpendicular to the longitudinal axis (X1) is between 60 and 80 degrees.

3. The screw according to claim 2, wherein an inclined angle (A1) formed by each of the ribs (26) extending toward the head end (18) relative to the horizontal axis (X2) is between 50 and 70 degrees.

4. The screw according to claim 2, wherein an upward extending direction of each of the plurality of ribs (12) is the same as an upward direction of the thread (14) extending toward the head end (18), with each of the plurality of ribs (26) having a height (H) less than a thread height of each thread convolution (24), with an upward spiral direction of the helical groove (28) being opposite to the upward direction of the thread (14) extending toward the head end (18), with the helical groove (28) having a depth (D) which is 1.5-2.5 times the height (H) of each rib (26).

5. The screw according to claim 1, wherein a cutting groove (34) is provided in the shank (12) adjacent to the insertion tip (20), with the helical groove (34) spirally extending from an upper end of the cutting groove (34) to an uppermost thread convolution (24) of the thread (14) continuously, wherein an inclined angle (A2) formed by the helical groove (28) extending toward the head end (18) relative to a horizontal axis (X2) perpendicular to the longitudinal axis (X1) is between 60 and 80 degrees.

6. The screw according to claim 5, wherein an inclined angle (A1) formed by each of the ribs (26) extending toward the head end (18) relative to the horizontal axis (X2) is between 50 and 70 degrees.

7. The screw according to claim 5, wherein an upward extending direction of each of the plurality of ribs (26) is the same as an upward direction of the thread (14) extending toward the head end (18), with each of the plurality of ribs (26) having a height (H) less than a thread height of each thread convolution (24), with an upward spiral direction of the helical groove (28) being opposite to the upward direction of the thread (14) extending toward the head end (18), with the helical groove (28) having a depth (D) which is 1.5-2.5 times the height (H) of each rib (26).

## Patentansprüche

1. Schraube (10), umfassend:
einen Schaft (12), der einen Außenumfang (16), eine Einführungsspitze (20) und ein entlang einer Längsachse (X1) des Schafts (12) von der Einführungsspitze (20) beabstandetes Kopfende (18) aufweist;
ein Gewinde (14), das schraubenförmig auf dem Außenumfang (16) des Schafts (12) ausgebildet ist und mehrere Gewindegänge (24) aufweist;
**gekennzeichnet durch**
mehrere Rippen (26), die zwischen zwei benachbarten Gewindegängen (24) des Gewindes (14) vorgesehen und auf dem Außenumfang (16) des Schafts (12) voneinander beabstandet sind; und
eine wendelförmige Nut (28), die in dem Außenumfang (16) des Schafts (12) ausgebildet ist und durchgehend durch mindestens Teilgewindegänge (24) des Gewindes (14) verläuft, wobei die wendelförmige Nut (28) Teilrippen (26) schneidet und eine Breite (W2) aufweist, die das 1,5-2,5-Fache einer Breite (W1) jeder Rippe (26) beträgt.

2. Schraube nach Anspruch 1, wobei die wendelförmige Nut (28) durchgehend von einem untersten Gewindegang (24) des Gewindes (14) zu einem obersten Gewindegang (24) des Gewindes (14) verläuft, wobei ein durch die zum Kopfende (18) verlaufende wendelförmige Nut (28) bezüglich einer senkrecht zur Längsachse (X1) verlaufenden horizontalen Achse (X2) gebildeter Neigungswinkel (A2) zwischen 60 und 80 Grad beträgt.

3. Schraube nach Anspruch 2, wobei ein durch jede der sich zu dem Kopfende (18) erstreckenden Rippen (26) bezüglich der horizontalen Achse (X2) gebildeter Neigungswinkel (A1) zwischen 50 und 70 Grad beträgt.

4. Schraube nach Anspruch 2, wobei eine nach oben verlaufende Erstreckungsrichtung jeder der mehreren Rippen (12) einer Aufwärtsrichtung des zum Kopfende (18) verlaufenden Gewindes (14) entspricht, wobei jede der mehreren Rippen (26) eine Höhe (H) aufweist, die kleiner als eine Gewindehöhe jedes Gewindegangs (24) ist, wobei eine nach oben verlaufende Wendelrichtung der wendelförmigen Nut (28) der Aufwärtsrichtung des zu dem Kopfende (18) verlaufenden Gewindes (14) entgegengesetzt ist, wobei die wendelförmige Nut (28) eine Tiefe (D) aufweist, die das 1,5-2,5-Fache der Höhe (H) jeder Rippe (26) beträgt.

5. Schraube nach Anspruch 1, wobei eine Schneidnut (34) neben der Einführungsspitze (20) in dem Schaft (12) vorgesehen ist, wobei die wendelförmige Nut (34) durchgehend wendelförmig von einem oberen Ende der Schneidnut (34) zu einem obersten Gewindegang (24) des Gewindes (14) verläuft, wobei ein durch die zu dem Kopfende (18) verlaufende wendelförmige Nut (28) bezüglich einer senkrecht zur Längsachse (X1) verlaufenden horizontalen Achse (X2) gebildeter Neigungswinkel (A2) zwischen 60 und 80 Grad beträgt.

6. Schraube nach Anspruch 5, wobei ein durch jede der sich zu dem Kopfende (18) erstreckenden Rippen (26) bezüglich der horizontalen Achse (X2) gebildeter Neigungswinkel (A1) zwischen 50 und 70 Grad beträgt.

7. Schraube nach Anspruch 5, wobei eine nach oben verlaufende Erstreckungsrichtung jeder der mehreren Rippen (26) einer Aufwärtsrichtung des zum Kopfende (18) verlaufenden Gewindes (14) entspricht, wobei jede der mehreren Rippen (26) eine Höhe (H) aufweist, die kleiner als eine Gewindehöhe jedes Gewindegangs (24) ist, wobei eine nach oben verlaufende Wendelrichtung der wendelförmigen Nut (28) der Aufwärtsrichtung des zu dem Kopfende (18) verlaufenden Gewindes (14) entgegengesetzt ist, wobei die wendelförmige Nut (28) eine Tiefe (D) aufweist, die das 1,5-2,5-Fache der Höhe (H) jeder Rippe (26) beträgt.

## Revendications

1. Vis (10), comprenant :
une tige (12) comprenant une circonférence extérieure (16), une pointe d'insertion (20), et une extrémité de tête (18) espacée de la pointe d'insertion (20) le long d'un axe longitudinal (X1) de la tige (12) ;
un filet (14) en forme d'hélice sur la circonférence extérieure (16) de la tige (12) comportant une pluralité de spires de filet (24) ; **caractérisée par**
une pluralité de nervures (26) prévues entre deux spires de filet adjacentes (24) du filet (14) et espacées les unes des autres sur la circonférence extérieure (16) de la tige (12) ; et
une gorge hélicoïdale (28) formée dans la circonférence extérieure (16) de la tige (12) et s'étendant en continu à travers des spires de filet au moins partielles (24) du filet (14), la gorge hélicoïdale (28) intersectant des nervures partielles (26) et ayant une largeur (W2) qui est de 1,5 à 2,5 fois une largeur (W1) de chaque nervure (26).

2. Vis selon la revendication 1, dans laquelle la gorge hélicoïdale (28) s'étend en continu jusqu'à une spire de filet la plus supérieure (24) du filet (14) à partir d'une spire de filet la plus inférieure (24) du filet (14), un angle incliné (A2) formé par la gorge hélicoïdale (28) s'étendant vers l'extrémité de tête (18) par rapport à un axe horizontal (X2) perpendiculairement à l'axe longitudinal (X1) étant compris entre 60 et 80 degrés.

3. Vis selon la revendication 2, dans laquelle un angle incliné (A1) formé par chacune des nervures (26) s'étendant vers l'extrémité de tête (18) par rapport à l'axe horizontal (X2) est compris entre 50 et 70 degrés.

4. Vis selon la revendication 2, dans laquelle une direction s'étendant vers le haut de chacune de la pluralité de nervures (12) est la même qu'une direction vers le haut du filet (14) s'étendant vers l'extrémité de tête (18), chacune de la pluralité de nervures (26) ayant une hauteur (H) inférieure à une hauteur de filet de chaque spire de filet (24), une direction en spirale vers le haut de la gorge hélicoïdale (28) étant opposée à la direction vers le haut du filet (14) s'étendant vers l'extrémité de tête (18), la gorge hélicoïdale (28) ayant une profondeur (D) qui est de 1,5 à 2,5 fois la hauteur (H) de chaque nervure (26).

5. Vis selon la revendication 1, dans laquelle une gorge de coupe (34) est prévue dans la tige (12) en position adjacente à la pointe d'insertion (20), la gorge hélicoïdale (34) s'étendant en spirale en continu à partir d'une extrémité supérieure de la gorge de coupe (34) jusqu'à une spire de filet la plus supérieure (24) du filet (14), un angle incliné (A2) formé par la gorge hélicoïdale (28) s'étendant vers l'extrémité de tête (18) par rapport à un axe horizontal (X2) perpendiculairement à l'axe longitudinal (X1) étant compris entre 60 et 80 degrés.

6. Vis selon la revendication 5, dans laquelle un angle incliné (A1) formé par chacune des nervures (26) s'étendant vers l'extrémité de tête (18) par rapport à l'axe horizontal (X2) est compris entre 50 et 70 degrés.

7. Vis selon la revendication 5, dans laquelle une direction s'étendant vers le haut de chacune de la pluralité de nervures (26) est la même qu'une direction vers le haut du filet (14) s'étendant vers l'extrémité de tête (18), chacune de la pluralité de nervures (26) ayant une hauteur (H) inférieure à une hauteur de filet de chaque spire de filet (24), une direction en spirale vers le haut de la gorge hélicoïdale (28) étant opposée à la direction vers le haut du filet (14) s'étendant vers l'extrémité de tête (18), la gorge hélicoïdale (28) ayant une profondeur (D) qui est de 1,5 à 2,5 fois la hauteur (H) de chaque nervure (26).
